# EUROPEAN PATENT SPECIFICATION

(11) **EP 0 566 544 B1**
(45) Date of publication and mention of the grant of the patent: **02.01.1997**
(21) Application number: 93830156.1
(22) Date of filing: 08.04.1993
(51) Int. Cl.: E04F 15/022, B32B 21/08

(54) **Floor board made up of a solid wood strip applied on top of a multi-layered supporting panel, with a mixed structure, comprising layers of wooden and non-wooden materials**
Fussbodenplatte aus einem mehrschichtigen tragenden Paneel, auf dessen Oberfläche ein massiver Holzstreifen aufgebracht ist und das aus einer Struktur aus hölzenen und nicht-hölzernen Materialschichten besteht
Panneau de plancher composé d'une bande de bois solide, appliquée sur la surface d'un panneau de support multi-couche, à structure mixte, comportant des couches de matériau en bois ou autres

(30) Priority: 15.04.1992 IT AN920012
(43) Date of publication of application: 20.10.1993
(73) Proprietor: MARGARITELLI - S.P.A., I-06087 Ponte San Giovanni (PG) (IT)
(72) Inventor: Margaritelli, Luca, I-06087 Ponte San Giovanni (PG) (IT)
(74) Representative: Baldi, Claudio

(56) References cited:
- DE-A- 2 014 131
- FR-A- 2 434 033
- GB-A- 2 085 357
- US-A- 3 619 964

## Description

The instant patent application for an industrial invention concerns a floor board made up of a solid wood strip applied on top of a multi-layered supporting panel with a mixed structure, comprising layers of wooden and non-wooden materials, such as metal or composite materials.

In particular this floor board includes a multi-layered supporting panel in which are obtained deep grooves, orthogonal or inclined with respect to the longitudinal axis of the board.

In fact, as is known, there have been available on the market for some time, wooden floor boards made up of solid wooden strips, generally glued to multi-layered supporting panels in plywood; it being provided that sometimes on said supporting panels there be transversal incisions which cover almost the entire thickness.

Moreover, in order to make it easier to match said products with those around them, it is provided that on the sides of the supporting panel of each floor board, there be grooves and corresponding ribs able to unite, male and female, with the identical ribs and grooves on the adjacent products.

These products have given good results and have met with considerable success; it is on the basis of these considerations that the Company requesting the instant patent concluded that it was well worth further improving their performance, particularly as concerns the specific aspect of undeformability.

In fact, at present conventional floor boards are sometimes subject, if the level of humidity varies, to swelling or shrinking which can occur not only while they are kept in stock, waiting to be laid in place, but also after they have been positioned side by side to make up a floor covering.

It is obvious that these deformations risk making it impossible, in the first case, to use the boards even before they have been fitted and in the second case, risk jeopardizing the uniformity and stability of the floor covering created by using such products.

In particular, a drop in the level of environmental humidity can lead to the formation of crevices on a floor; on the other hand, surface waviness can be caused by an increase in humidity or in any case, in the presence of a gradient of humidity between the opposite surfaces of the boards.

At the present time, the only radical solution to the problem could be that of increasing the thickness of the floor board; however, this solution is not advisable in that it does not prove to be very practical and it is considerably costly.

Wooden floor boards of the type described in patent GB 2085357 consisting of a supporting wooden sandwich type structure on which a very thin strip of solid wood such as pine or oak is glued, are commonly available on the market.

A layer of extremely hard material (generally metal) is glued on this supporting structure to make the solid wood layer sturdier since without a support of this kind this thin layer of wood would be very yelding and vulnerable.

As an alternative to an item of this kind, we have decided to realize a floor board which is not only extremely sturdy but also very flexible and characterised by structural and dimensional stability.

The floor board according to the invention in fact consists of a board made of high quality wood applied over a supporting panel composed of wooden and non-wooden layers; the board features a series of deep grooves on the bottom face of the support panel which are orthogonal or slanted with respect to the axis of the board.

The grooves are spaced at regular intervals which give the item as a whole great longitudinal flexibility as well as the capacity to compensate the tendency of the multi-layered supporting panel to deform.

Any strain which might in fact develop along the supporting panel can in fact be released in the compartments formed by the above grooves without compromising the structure of the board as a whole.

In this floor board the non-wooden layers make up the top surface or the bottom surface of the multi-layered panel or even both of these, but is not out of the question for these to also be positioned in an intermediate position with respect to the wooden layers.

As anticipated, these non-wooden layers could be made of metal, such as alluminium, brass, lead or copper, even if at the present time, it would seem that alluminium is the material which offers the best functional performance also in consideration of its price; moreover, alluminium, together with brass, is particularly advisable from the practical point of view, in that it can be worked with the same tools used to work the wooden layers.

Alternatively, all these non-wooden layers could be made up of composite materials, such as fibreglass reinforced resin or carbon; in the same way it could be provided that the structure of the multi-layered panel in question comprises simultaneously wooden layers, metal layers and layers in composite materials in a suitable combination.

In any case, this new type of multi-layered supporting panel is able to provide the floor board with numerous advantages compared to previous techniques; advantages, which above all concern the fact that it does not deform as easily as conventional products made entirely of wood, at the same level of humidity absorbed by all the wooden layers.

It does, in any case, prove to be less sensitive to environmental humidity and even waterproof, should the layer of non-wooden material be positioned on the bottom, with respect to infiltrations of humidity which may be caused by a humid sub-base.

Moreover, it is observed that, should a layer of non-wooden material be positioned at a point corresponding to the ribs and relative grooves on the sides of the multi-layered panel for the male and female coupling of afjacent products, it is possible to obtain an improvement in the precision and rigidity of said coupling between the boards.

In conclusion, it should be specified that the extraordinary rigidity guaranteed on floor boards with these non-wooden layers, makes them suitable, in spite of their contained thickness, for laying in place without the necessity of glueing, so as to obtain a floor covering of the "floating" type.

For further clarity of explanation, the description of the invention continues with reference to the attached drawing, which is reproduced for illustrative and not limitative purposes wherein :

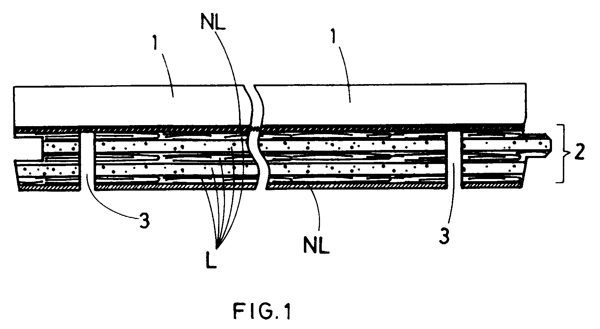

- Fig. 1 illustrates the floor board according to the invention.

With reference to Fig.1, the floor board in question is made up of a strip in solid wood (1), glued on top of a multi-layered supporting panel (2), which is composed of layers of wooden materials (L) and non-wooden materials (NL); more particularly, these non-wooden materials could be metal or composite materials.

In this form of embodiment, the non-wooden layers (NL) make up the bottom and the top surfaces of the panel (2), but it is possible, still within the scope of the instant invention, for the panel to be provided with non-wooden layers placed in an intermediate position with respect to the wooden layers, or even for one non-wooden layer to make up only the bootm surface or only the top surface of the multi-layered panel.

The floor board presents grooves (3) on the multi-layered panel.

These grooves could be orthogonal or inclined with respect to the longitudinal axis of the floor board; in the Figure 1 version, these grooves cut through all the layers of the panel (2), except for the non-wooden layer which constitutes the top surface and which will abut directly below the solid wood strip (1).

On the other hand, should the panei (2) not be provided with a non-wooden layer as its top surface, then said grooves cut through the entire thickness of the panel (2).

## Claims

1. Floor board consisting of a solid wood strip (1) glued on a multi-layer standard wood support panel (2) realised with layers of wooden (L) and non-wooden (NL) materials characterised in that the bottom face of the supporting panel (2) have deep grooves (3) orthogonal or slanted with respect to the longitudinal axis of the strip, spaced at regular distances.

2. Floor board, according to claim 1, characterised in that the grooves (3) cut through all the layers of the panel (2).

3. Floor board, according to claim 1, characterised in that the grooves (3) cut through all the layers of the panel (2), except for the non-wooden layer which makes up the top surface and which will abut directly below the solid wood strip(1).

## Patentansprüche

1. Parkettbodenleiste, bestehend aus einer Edelholz-Leiste (1), aufgeklebt auf ein Mehrschichten-Trägerpaneel (2), hergestellt aus holzhaltigen (L) und nicht-holzhaltigen (NL) Materialschichten, dadurch gekennzeichnet, daß auf der Unterseite des Trägerpaneels (2) tiefe, rechtwinklig oder schräg zur Längsachse der Leiste verlaufende und in regelmäßigem Abstand voneinander angeordnete Rillen vorgesehen sind.

2. Parkettbodenleiste gemäß Anspruch 1, dadurch gekennzeichnet, daß die besagten Rillen (3) durch sämtliche Schichten des Trägerpaneels (2) hindurchgeführt werden.

3. Parkettbodenleiste gemäß Anspruch 1, dadurch gekennzeichnet, daß die besagten Rillen (3) durch sämtliche Schichten des Trägerpaneels (2) hindurchgeführt werden, mit Ausnahme der nicht-holzhaltigen Schicht, die die Oberseite bildet und dazu vorgesehen ist, unmittelbar unterhalb der Edelholz-Leiste (1) angebracht zu werden.

## Revendications

1. Lame pour sol, du type comprenant une lame en bois de prix (1) collée sur un panneau en bois contre-plaqué de support (2), panneau réalisé en couches de matériel ligneux (L) et non ligneux (NL), caractérisé en ce que sur le côté inférieur du panneau de support (2) sont prévues de profondes rainures (3) orthogonales ou inclinées par rapport à l'axe longitudinal de la lame et régulièrement distancées entre elles.

2. Lame pour sol, selon la revendication 1), caractérisée en ce que les susdites rainures (3) incident toutes les couches du panneau de support (2).

3. Lame pour sol, selon la revendication 1), caractérisée en ce que les susdites rainures (3) incident toutes les couches du panneau de support (2), sauf la couche non ligneuse qui en constitue le côté supérieur et qui résulte destinée à se poser directement au-dessous de la lame en bois de prix (1).
